# EUROPEAN PATENT SPECIFICATION

(11) **EP 0 812 518 B1**
(45) Date of publication and mention of the grant of the patent: **31.03.2004**
(21) Application number: 96911043.6
(22) Date of filing: 24.04.1996
(51) Int. Cl.: H04Q 7/24

(54) **MOBILE COMMUNICATION SYSTEM WITH INTELLIGENT NETWORK SERVICES**
MOBILES ÜBERTRAGUNGSSYSTEM MIT INTELLIGENTEN NETZWERKDIENSTEN
SYSTEME DE TELECOMMUNICATIONS

(30) Priority: 25.04.1995 GB 9508389
(43) Date of publication of application: 17.12.1997
(73) Proprietor: Nortel Networks Limited, St. Laurent, Quebec H4S 2A9 (CA)
(72) Inventor: SHARP, Iain, Taplow, Maidenhead, Berks SL6 0ET (GB); HO, Stephanie, Grapevine, TX 75061 (US); UTAS, Gregory, R., Irving, TX 75063 (US); WELLING, James, Brian, Dallas, TX 75252 (US)
(74) Representative: Anderson, Angela
(86) International application number: PCT/GB1996/000985
(87) International publication number: WO 1996/034502

(56) References cited:
- WO-A-95/26114
- ERICSSON REVIEW, vol. 71, no. 3, 1994, STOCKHOLM SE, pages 145-149, XP000467130 LANTTO: "Intelligent Network Arfchitecture in the Japanese Digital Celluloar Standard - PDC "
- PROCEEDINGS OF THE GLOBAL TELECOMMUNICATIONS CONFERENCE (GLOBECOM), SAN FRANCISCO, NOV. 28 - DEC. 2, 1994, vol. 2 OF 3, 28 November 1994, INSTITUTE OF ELECTRICAL AND ELECTRONICS ENGINEERS, pages 1253-1258, XP000488735 ISOTALO L: "APPLYING INTELLIGENT NETWORKS TO GSM"
- ERICSSON REVIEW, vol. 70, no. 4, 1 January 1993, pages 156-171, XP000415352 SODERBERG L: "EVOLVING AN INTELLIGENT ARCHITECTURE FOR PERSONAL TELECOMMUNICATION"
- IEEE COMMUNICATIONS MAGAZINE, vol. 33, no. 1, 1 January 1995, pages 88-98, XP000495895 BIJAN JABBARI ET AL: "NETWORK ISSUES FOR WIRELESS COMMUNICATIONS"

## Description

This invention relates to mobile communications systems and in particular to an arrangement and method for the provision of intelligent network services to mobile system subscribers.

### BACKGROUND OF THE INVENTION

A number of mobile communications systems are currently being introduced to provide voice communication to mobile subscriber terminals. In such systems, calls may be set up either between mobile subscribers or between a mobile subscriber and a fixed public network (PSTN) subscriber. A typical mobile system is the GSM system. This system provides an interface between mobile subscribers and the public (PSTN) network via a number of mobile switching centres (MSC), each of which serves mobile terminals currently located in cells comprising its service area. Information on the current location of subscribers involved in calls is determined from data stored in a home location register (HLR) and one or more visitors location registers (VLR) associated with the system. Setup of calls from and to the mobile tertminals involves messaging protocols between the HLR, the VLRs and the MSC. These protocols are defined in a standard associated with the system and all equipment supplied for use in the system is required to conform to this standard.

While these mobile systems currently provide what is effectively a POTS service to their subscribers, there is an urgent need to introduce services, such as call forwarding, call barring, that are provided to fixed networks or PSTN customers. These services are provided via an intelligent network (IN) which forms an additional layer of the fixed network. The provision of these IN services to mobile systems has introduced the problem of establishing protocols that are compatible with current mobile communications standard procedures to ensure that calls incorporating IN services are correctly and efficiently routed to mobile system users. One approach to this problem is described in specification No. WO 93/18606 which describes a system in which an intelligent network wireline system connects to and controls processing of calls to a mobile system handset. However, this arrangement envisages provision of a home location register in the intelligent network. This requires modification of the intelligent network which can reduce that networks capability of operating with a variety of proprietary systems.

The document Ericsson Review, vol.71, no.3, 1994, Stockholm SE, pages 145-149, XP000467130 LANTTO: "Intelligent Network Architecture in the Japanese Digital Cellular Standard ― PDC" describes one way of integrating an intelligent network architecture into cellular systems. The enhanced network architecture is described as being based on the principle of strictly separating IN network-oriented services from the mobile subscriber specific services, both from a service point of view and from a network architecture point of view.

It is an object of the invention to provide an improved arrangement and method for supplying intelligent network services to mobile network subscribers.

### SUMMARY OF THE INVENTION

The invention provides a method as defined in claim 1; a mobile switching centre as defined in claim 5 and a communications network as defined in claim 8. An example provides an arrangement for setting up an intelligent network call from an intelligent network to a mobile network subscriber served via a mobile switching centre, the mobile network incorporating a home location register for storing information including location information relating to mobile subscribers, wherein the call set up procedure comprises an origination call model and a termination call model associated respectively with an originating terminal and a terminating terminal wherein the termination call model has initial stages defining routing information requests and authorisation of termination, wherein said initial stages are provided both in the home location register and in the mobile switching centre, and wherein the termination call model associated with intelligent network calls to mobile subscribers is shared between the home location register and the mobile switching centre whereby to facilitate participation of both the home location register and the mobile switching centre in the call termination procedure.

Another example provides a method of setting up an intelligent network call from a fixed network to a mobile subscriber served via a mobile switching centre in a mobile network incorporating a home location register for storing information including location information relating to mobile subscribers, the method including defining respective origination and termination intelligent network call models, providing the termination call model in the mobile switching centre, and further providing at least part of the termination call model in the home location register whereby call termination to a mobile terminal is shared between the home location register and the mobile switching centre.

The technique provides integration of the special service point (SSP) functions into the mobile network. This creates a node which combines MSC, VLR and SSP functionality.

Advantageously, the mobile network incorporates means for providing a mapping between its own call model and other proprietary call models that may be employed by various intelligent network systems.

### BRIEF DESCRIPTION OF THE DRAWINGS

An embodiment of the invention will now be described with reference to the accompanying drawings in which:-
Figure 1 is a general schematic diagram illustrating an arrangement for providing intelligent networks (IN) series to mobile network subscribers;
Figure 2 illustrates an intelligent network (IN) origination call model employed in the arrangement of Figure 1;
Figure 3 illustrates an IN termination call model employed in the fixed network of the arrangement of Figure 1;
Figure 4 illustrates the IN terminal call model of figure 3 adapted for use in the mobile network of Figure 1; and
Figures 5 and 6 illustrate a mapping between two IN call models for origination and termination respectively.

### DESCRIPTION OF PREFERRED EMBODIMENT

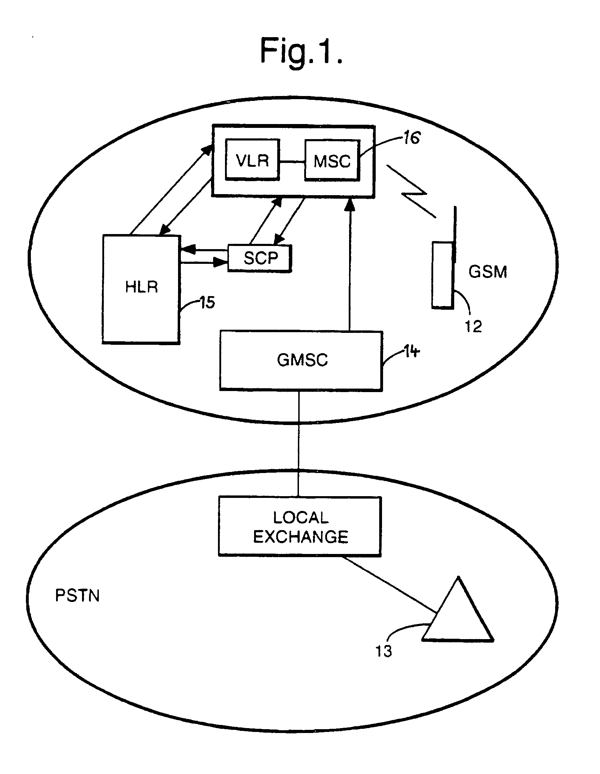

Referring to Figure 1, calls incorporating special IN services provided via a fixed or PSTN network may be set up between a mobile network terminal 12 and a fixed network terminal 13 or between two mobile terminals. The terminal making the call is referred to as the call originator and the terminal receiving the call is referred to as the call terminator.

In the arrangement of figure 1, each MSC is provided with an associated visitors location register (VLR) containing information on mobile terminals currentlly in the service area of the MSC. The combined functionality of the MSC and the VLR provides a special service point (SSP) for these mobile terminals.

The mobile system is provided with origination and termination call models so that the mobile terminals served by the system can both originate and receive calls incorporating IN services.

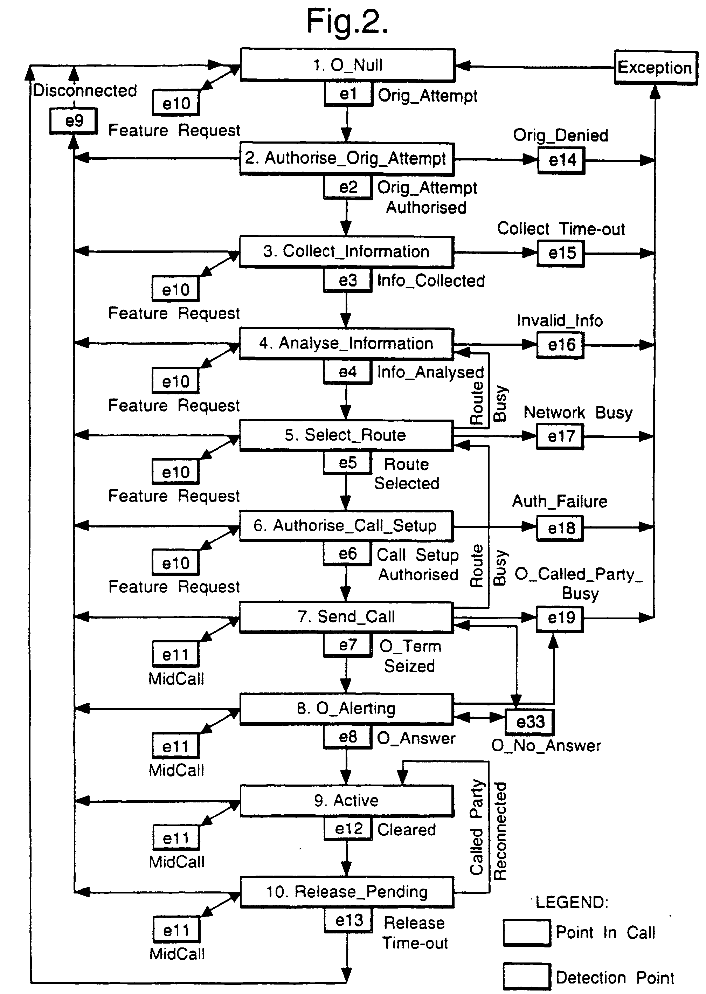

The IN origination call model employed in this embodiment is illustrated in Figure 2. The successive stages of the call model are referred to as points in call (PIC) and each is associated with one or more detection points. This call model is referred to as the AlN 0.x call model. The mobile MSC origination activity corresponding to the stages of this call model is detailed below.

A Setup message is received by the ISSP.

A Send Info For Outgoing Call message comprises two messages:

### PIC #1 - O-Null

1) Provide Subscriber Info-- for getting subscriber (SS+IN) information. This message is sent by the MSC to the VLR.
2) Process Orig SS -- to tell the VLR to process originating SS.
   **e1** - Orig_Attempt is used to indicate that the subscriber profile has been provided by the VLR.

### PIC #2 - Authorize-Origination-Attempt

The MSC sends a Process Orig SS message to the VLR to stimulate originating SS processing.

The VLR, depending on the subscriber profile, may perform the following origination SS:
Class of Service (COS), Call Barring, Operator Determined Barring (ODB), Local Calls Only (LCO).

After performing originating services, the VLR may respond to the Process Orig SS message with either of the following messages: (1)
Complete Call or (2) Error
   **e14** - Orig_Denied DP is used for Error case.
   **e2** - Orig_Attempt_Authorized is used for the Complete Call case. Speech path is established.
   **e9** - Disconnected is used if the originator releases the call at this point.

### PIC #3 - Collect-Information

Setup message processing is continued in the MSC.
**e3** -Info_Collected is used if the Setup message is processed successfully.
**e15** - Collect_Timeout is used for missing or "badly formed" digits.
**e9** - Disconnected is used if the originator releases the call at this point.

### PIC #4 - Analyse-Information

This continues setup message processing
Translations (Source Directed Routing) occurs at this stage. Translations may result either in a Send Routing Information (SRI) or a regular route list for PSTN type terminations.

The query to the HLR and the response from the HLR for the SRI message is handled.
As a response to SRI, the HLR may return one of the following:
- a SRI ack message with a MSRN or
- a Connect_To_Following_Addr message for Call Forwarding, Uncond. and Not Reg., or
- a Call_Barred error message for (Operator Determined) Call Barring.
A SRI ack will cause translations to be invoked again (MSRN xlation occurs in this PIC).
A Connect_To_Following_Addr message will result in the creation of a virtual call (model) for the called party.
A Call_Barred error message will result in a call later takedown.
**e4 -** Info Analysed is used to enter Send Routing Info (SRI) operation for mobile terminations. For PSTN terminations e4 will be used to indicate the successful termination of translations.
**e9** - Disconnected is used if the originator releases the call at this PIC.
**e16** - Invalid Info is used to indicate errors in translations.

### PIC #5 - Select-Route

**e5** - Route Selected is used if the HLR is reachable for an SRI.
**e9** - Disconnected is used if the originator releases the call at this point.
**e17** - Network Busy is used to indicate any signalling failures for SRI operation.

### PIC #6 - Authorize-Call-Setup

**e6 -** Call_Setup_Authorized is used to indicate that call termination attempt is not restricted.
**e9 -** Disconnected will be used if the originator releases the call at this PIC.
**e18 -** Auth_Failure is used to indicate incoming call rejection by the terminator (See SRI).

### PIC #7 - Send-Call

This point in call causes a Terminating Call Model to be invoked.
An Initial Address Message (IAM) is sent to the terminator.
Call Proceeding message is sent to the mobile originator.
**E7** - O_Term_Seized is used to indicate that the terminator has accepted the call.
**e9** - Disconnected is used if the originator releases the call at this PIC.
**e19** - O_Called_Party_Busy is used to indicate that the terminator is busy.
**e33** - O_No_Answer is used that the SSP timer expired indicating that the terminator has not yet answered.

### PIC #8 - O-Alerting

Terminator sent Progress or Alerting messages are received in this point in call. For cases of incomplete calls, such things as "user busy", "no answer", "call rejected" may also occur.
The mobile originator is given Progress/Alerting/Connect/Connect Ack messages.
**e33** - O_No_Answer is used that the SSP timer expired indicating that the terminator has not yet answered.

### PIC #9 - O-Active

At this point in call there is a connection established between the originator and the terminator.
Supervision is being provided.
**e12** - Cleared is used if the terminator releases the call

### PIC #10 - Release-Pending

The call take-down sequence occurs at this point in call. For mobile originators the call takedown may involve Disconnect, Release, and Release Complete messages.
**e12** - Cleared is used if the terminator releases the call.

In the arrangement of Figure 1, a call incorporating IN services to a mobile terminal 12 is switched from the fixed or PSTN network to a gateway mobile switching centre 14 (GMSC) in the mobile network. Within the mobile network, the first task is to locate the mobile terminal so that routing of the call to that mobile terminal can then be determined. Information relating to all system terminals is stored in a central database commonly referred to as a home location register (HLR) 15 having IN functionality. The GMSC sends a location request to the HLR which accesses the subscriber information and returns the network address of the mobile switching centre (MSC) 16 in whose service area the mobile terminal 12 is currently located. The call is then routed to this MSC. Information is transferred from the HLR to the VLR when a MS first arrives in the MSC. The MSC and the VLR together perform the function of an ISSP. A service control point (SCP) may be provided either in the mobile network as shown or in the fixed network.

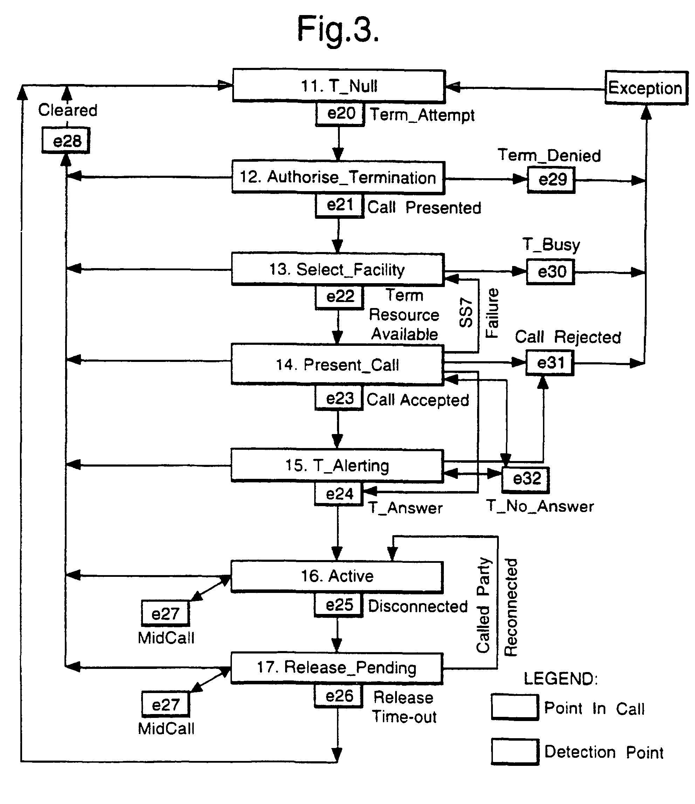

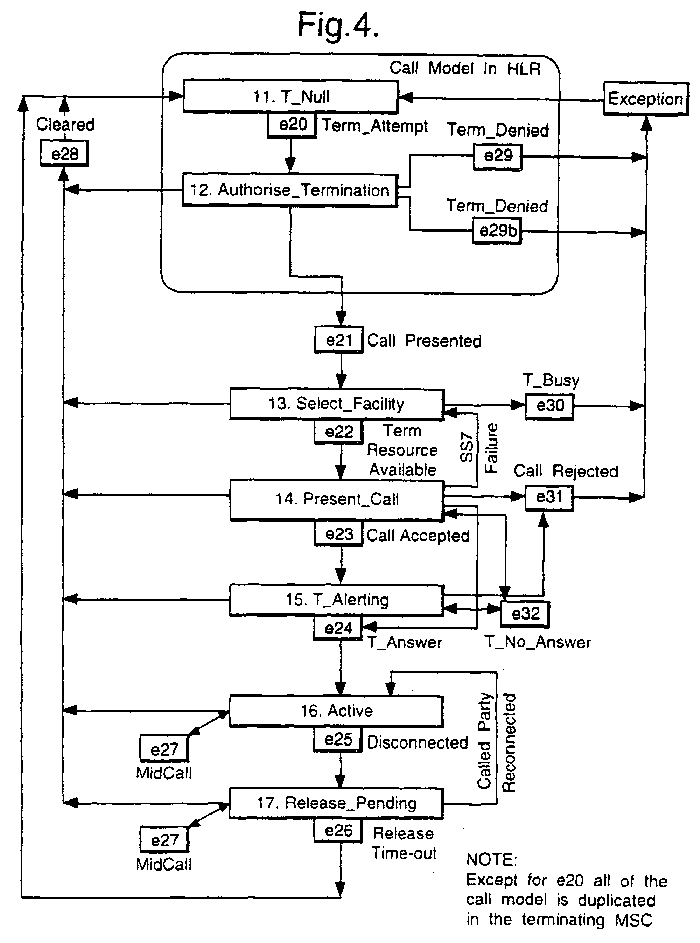

In the above procedure, both the HLR and the MSC are involved in the call termination process. In our arrangement this involvement is facilitated by splitting the IN, terminating call model between the HLR and the MSC. This is illustrated in the flow charts of Figures 3 and 4.

Referring to Figure 4, the first two stages of the IN call (PICs 11 and 12) model are contained both in the HLR and in the MSC. In the first stage the HLR receives a message asking for routing information which message triggers a call termination attempts. The formal sequence of events associated with this stage is listed below:

### PIC #11 - T-Null

Send Routing Information (SRI) message is received by the HLR with IN functionality.

### e20 - Term_Attempt DP is triggered at the reception of the SRI.

In the next stage listed in detail below, the call termination may be authorised:

### PIC #12 - Authorize-Termination

The HLR, depending on the subscriber profile, may perform the following termination SS: Call Barring, Operator Determined Barring (ODB), Call Forwarding Unconditional (CFU), Call Forwarding Not Registered (CFNreg), Alternate Line Service (ALS), etc. The HLR may also want to perform roamer service screening.

The HLR sends a Provide Roaming Number (PRN) to the terminating VLR. For IN enhanced HLRs, this PRN will optionally contain IN trigger-subscription information.
**e21 -** Call_Presented indicates that the call is to be completed (i.e. no barring).
**e28** - Cleared indicates that the originator has disconnected.
**e29 -** Term_Denied indicates that the call is barred.
**e29b -** Term_Denied indicates that CF_not_registered has occurred.

In some applications the HLR may also perform roamer service screening to take account of the service profile to which a visiting mobile terminal is entitled or is capable of receiving when located in the service area of te mobile switching centre.

Placing the above two points of the IN terminating call model on the HLR provides the HLR with a functionality such that it appears as a service switching point (SSP) to the fixed network service control point (SCP) although the HLR cannot of course provide all the SSP functions that the SCP might request. To address this possibility, either the HLR is assigned to forward such requests to the MSC for processing, or the SCP can recognise that a particular request originated from an HLR and send that request directly to the MSC. We prefer to place the first two PICs of the termination call model on the HLR as the functions contained in these PICs are most closely analagous to the functions performed by the HLR in the GSM system. Thus, by keeping the semantics of the PICs closely similar between the mobile system and the PSTN we enhance the technology and service transfer between the two networks.

In some applications these PICs of the termination call model may be placed on the gateway MSC (GMSC) which interacts with the HLR during MT call establishment

The MSC mobile call model is listed below. It will be seen that there are minor differences in the fisrt two PICs in comparison with those associated with the HLR. These differences reflect the difference in functionality between the MSC and the HLR.

### PIC #11 - T-Null

Initial Address Message (IAM)/Setup message is received by the terminating ISSP.

Send Info For Incoming Call message is now divided into two messages:
1) Provide Subscriber Info-- for getting subscriber (SS+IN) info, and
2) Process Term SS-- to tell VLR to process terminating SS.

Provide Subscriber Info is sent by the MSC to the VLR. The VLR acknowledges the query by sending SS and IN data.
**e20** - Term_Attempt is unused at the terminating MSC (see HLR PIC activity).

### PIC #12 - Authorize-Termination

The MSC sends Process Term SS message to the VLR to stimulate terminating SS processing.

The VLR responds to the Process Term SS with either a Page message or aConnect_to_Following_Addr(<newDN>). The Connect_to_Following _Addr message will only be sent if mobile terminator has subscribed-to Call Forwardining Not Registered (CFNreg.) and has detached his-her IMSI.

After the Page message the VLR sends a Complete Call message.
**e21 -** Call Presented is used for normal call completion (reception of Complete Call message).
**e28 -** Cleared is used if the originator releases the call at this PIC.
**e29(b)**- Term_Denied is unused in the terminating ISSP (see HLR call model).

### PIC #13 - Select-Facility

In certain cases the ISSP may, without paging, discover the busy or "not responsive" nature of the terminator. Under such circumstances the VLR will look into the subscriber profile of the terminator to see if any further terminating SS are applicable. If Call Waiting (CW) is applicable, a Process_Call_Waiting message is returned. For Call Forwarding No Reply SS a Connect_to_Following_Addr (<newDN>) message is returned.
In general, the nature of this PIC is to realize the busy/idle status of the terminator.
**e22** -Term_Resource_Available is used if the page response is positive.
**e28** - Cleared is used if the originator releases the call at this PIC.
**e30** -T_Busy is used if the page processing indicates a busy subscriber.

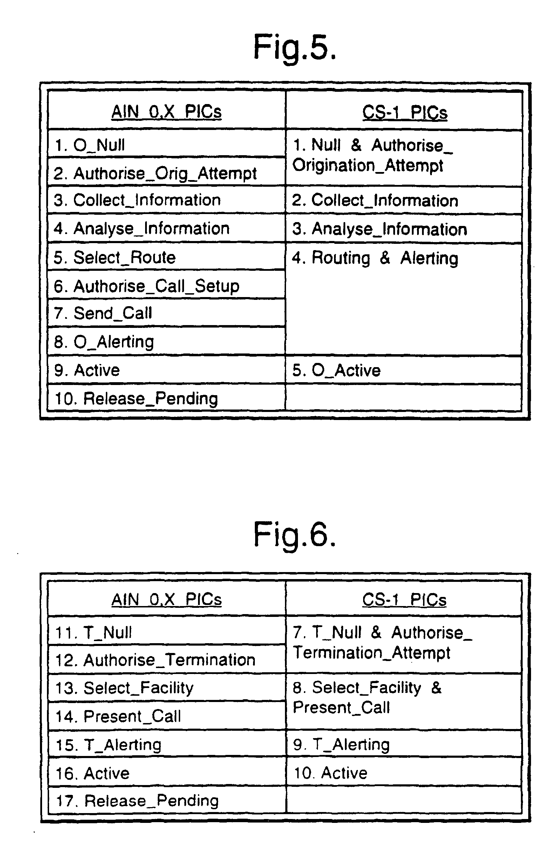

It will be understood that the technique described above is not limited to the particular AlN 0.x call model descrbed by way of example. Other IN call models can of course be employed. A preferred method of adapting an alternative call model to the technique is to provide a mapping between that call model and the AlN 0.x call model described in the specific embodiment. An example of a mapping between a standard call model referred to as CS-1 and the AlN 0.x call model is depicted in figures 5 and 6 which show resectively the mapping of the originating call models and the terminating call models between these two protocols. By providing this mapping, the operation of the mobile network is substantial independent of particular protocols of hte intelligent network providing services to the mobile subscribers.

It will further be understood that although the above description refers to the GSM mobile system, it is not limited to that particular system but is also applicable to other standard mobile sysytems, such as those defined e.g. by the DCS1800 and PCS1900 Standards.

## Claims

1. A method of setting up a call incorporating intelligent network services over a communications network comprising a mobile network, said mobile network comprising:
(i) a mobile switching centre (MSC) arranged to enable mobile terminals to connect to the mobile network in use; and
(ii) a home location register (HLR);
and wherein said communications network comprises a fixed intelligent network, said method comprising:
a) storing intelligent network subscriber profiles on a visitors location register (VLR) associated with the MSC, said profiles being associated with mobile terminals currently within a service area of the MSC;
b) defining an origination call model and a termination call model, wherein both the HLR and the MSC are involved in the call termination process;
c) carrying out origination activity at the MSC according to the origination call model and intelligent network subscriber profile information retrieved from the VLR.

2. A method as claimed in claim 1 which further comprises providing the termination call model in the mobile switching centre, and further providing at least part of the termination call model in the home location register whereby call termination to a mobile terminal is shared between the home location register and the mobile switching centre.

3. A method as claimed in claim 2, wherein a mapping is provided between a first call model employed by the mobile network and a second call model employed by the intelligent network.

4. A method as claimed in claim 2 or 3, and including roamer service screening of calls to or from the mobile subscribers so as to restrict the range of services available to a said subscriber.

5. A mobile switching centre arranged for use in a mobile network and arranged for setting up a call incorporating intelligent network services over the mobile network, **characterised in that** said mobile switching centre has an associated visitors location register (VLR) comprising stored intelligent network subscriber profiles, said profiles being associated with mobile terminals currently within a service area of the MSC; said MSC being arranged to carry out origination activity according to an origination call model and intelligent network subscriber profile information retrieved from the VLR; said MSC being further arranged to carry out termination activity according to a termination call model interacting with a Home Location Register (HLR) in the mobile network; and wherein said mobile switching centre is arranged to set up the call over a fixed intelligent network and the mobile network.

6. A mobile switching centre as claimed in claim 5 wherein the visitors location register and the mobile switching centre together provide a special services point for mobile terminals

7. A mobile switching centre as claimed in claim 5 or 6 wherein said mobile switching centre comprises a gateway mobile switching centre providing an interface between the intelligent network and the fixed network.

8. A communications network comprising a mobile network said mobile network comprising:
(i) a mobile switching centre (MSC) arranged to enable mobile terminals to connect to the mobile network in use; and
(ii) a home location register (HLR); **characterised in that** the communications network further comprises a fixed intelligent network and said mobile network further comprises;
(iii) a visitors location register (VLR) associated with the MSC and having stored intelligent network subscriber profiles which are associated with mobile terminals currently within a service area of the MSC; and
(iv) an origination call model and a termination call model; said MSC being arranged to carry out origination activity according to the origination call model and intelligent network subscriber profile information retrieved from the VLR and said MSC being arranged to carry out termination activity interacting with said HLR.

9. A communications network as claimed in claim 8 wherein the HLR is adapted to provide roamer service screening of calls to or from mobile subscribers so as to restrict the range of services available to a said subscriber.

## Patentansprüche

1. Verfahren zum Aufbau einer intelligente Netzdienste .beinhaltenden Verbindung über ein Kommunikationsnetz, das ein Mobilnetz umfasst, wobei das Mobilnetz Folgendes umfasst:
(i) eine Funkvermittlungsstelle (MSC), die so ausgebildet ist, dass sie es mobilen Endgeräten ermöglicht, bei Benutzung eine Verbindung mit dem Mobilnetz herzustellen; und
(ii) ein Heimatregister (HLR);
wobei das Kommunikationsnetz ein intelligentes Festnetz umfasst und das Verfahren folgende Schritte umfasst:
a) Speichern von intelligenten Netz-Teilnehmerprofilen in einem Besucherregister (VLR), das der MSC zugeordnet ist, wobei die Profile mobilen Endgeräten zugeordnet sind, die sich derzeit in einem Dienstebereich des MSC befinden;
b) Definieren eines Ursprungs-Verbindungsmodells und eines Ziel-Verbindungsmodells, wobei sowohl das HLR als auch die MSC an dem Ziel-Verbindungsprozess beteiligt sind;
c) Ausführen von Ursprungsaktivität an der MSC entsprechend dem Ursprungs-Verbindungsmodell und der intelligenten Netz-Teilnehmerprofil-Information, die von dem VLR gewonnen wird.

2. Verfahren nach Anspruch 1, das weiterhin die Bereitstellung des Ziel-Verbindungsmodells in der Funkvermittlungsstelle umfasst, und weiterhin Bereitstellen zumindest eines Teils des Ziel-Verbindungsmodells in dem Heimatregister, wodurch der Ziel-Verbindungsabschluss zu einem mobilen Endgerät gemeinsam durch das Heimatregister und die Funkvermittlungsstelle durchgeführt wird.

3. Verfahren nach Anspruch 2, bei dem eine Umsetzung zwischen einem ersten Verbindungsmodell, das von dem Mobilnetz verwendet wird, und einem zweiten Verbindungsmodell bereitgestellt wird, das von dem intelligenten Netz verwendet wird.

4. Verfahren nach Anspruch 2 oder 3, das eine Rufbereichswechsel-Dienst-Prüfung von Verbindungen zu oder von den mobilen Teilnehmern einschließt, um den Bereich von Diensten zu beschränken, die für diesen Teilnehmer verfügbar sind.

5. Funkvermittlungsstelle, die zur Verwendung in einem Mobilnetz ausgebildet ist und zum Aufbau einer Verbindung, die intelligente Netzdienste beinhaltet, über das Mobilnetz ausgebildet ist, **dadurch gekennzeichnet, dass** die Funkvermittlungsstelle ein zugehöriges Besucherregister (VLR) aufweist, das gespeicherte intelligente Netz-Teilnehmerprofile umfasst, wobei die Profile mobilen Endgeräten zugeordnet sind, die sich derzeit in einem Dienstebereich der MSC befinden, wobei die MSC zur Ausführung von Ursprungs-Aktivitäten entsprechend eines Ursprungs-Verbindungsmodells und intelligenter Netz-Teilnehmerprofil-Information ausgebildet ist, die von dem VLR gewonnen wird; wobei die MSC weiterhin so ausgebildet ist, dass sie die Ziel-Aktivität entsprechend einem Ziel-Verbindungsmodell unter Wechselwirkung mit einem Heimatregister (HLR) in dem Mobilnetz ausführt; und wobei die Funkvermittlungsstelle so ausgebildet ist, dass sie die Verbindung über ein intelligentes Festnetz und das Mobilnetz aufbaut.

6. Funkvermittlungsstelle nach Anspruch 5, bei dem das Besucherregister und die Funkvermittlungsstelle zusammen einen Spezialdienste-Punkt für mobile Endgeräte bilden.

7. Funkvermittlungsstelle nach Anspruch 5 oder 6, bei dem die Funkvermittlungsstelle eine Überleit-Funkvermittlungsstelle umfasst, die eine Schnittstelle zwischen dem intelligenten Netz und dem Festnetz bereitstellt.

8. Kommunikationsnetz mit einem Mobilnetz, wobei das Mobilnetz Folgendes umfasst:
(i) eine Funkvermittlungsstelle (MSC), die so ausgebildet ist, dass sie es beweglichen Endgeräten ermöglicht, eine Verbindung zu dem Mobilnetz im Gebrauch herzustellen; und
(ii) ein Heimatregister (HLR), **dadurch gekennzeichnet, dass** das Kommunikationsnetz weiterhin ein intelligentes Festnetz umfasst und dass das Mobilnetz weiterhin Folgendes umfasst:
(iii) ein Besucherregister (VLR), das der MSC zugeordnet ist und gespeicherte intelligente Netz-Teilnehmerprofile aufweist, die mobilen Endgeräten zugeordnet sind, die sich derzeit in einem Dienstebereich der MSC befinden; und
(iv) ein Ursprungs-Verbindungsmodell und ein Ziel-Verbindungsmodell;
wobei die MSC so ausgebildet ist, dass sie Ursprungs-Aktivitäten entsprechend dem Ursprungs-Verbindungsmodell und intelligenten Netz-Teilnehmerprofil-Informationen ausführt, die von dem VLR gewonnen werden, und dass die MSC so ausgebildet ist, dass sie Ziel-Aktivitäten in Wechselwirkung mit dem HLR ausführt.

9. Kommunikationsnetz nach Anspruch 8, bei dem das HLR so ausgebildet ist, dass es eine Rufbereichswechseldienst-Prüfung von Verbindungen zu oder von mobilen Teilnehmern bereitstellt, um den Bereich von Diensten zu beschränken, die für diesen Teilnehmer verfügbar sind.

## Revendications

1. Procédé pour établir une communication incorporant des services de réseau intelligent sur un réseau de communication comprenant un réseau mobile, ledit réseau mobile comprenant :
(i) un centre de commutation mobile (MSC) adapté de façon à permettre la connexion de terminaux mobiles au réseau mobile lors de l'utilisation ; et
(ii) un registre de localisation nominal (HLR) ; et dans lequel ledit réseau de communication comprend un réseau intelligent fixe, ledit procédé comprenant les étapes consistant à :
a) stocker des profils d'abonnés au réseau intelligent sur un registre de localisation des visiteurs (VLR) associé au MSC, lesdits profils étant associés aux terminaux mobiles dans une zone de service du MSC à l'instant courant ;
b) définir un modèle d'établissement d'appels et un modèle de terminaison d'appels, dans lequel à la fois le HLR et le MSC sont impliqués dans le processus de terminaison de l'appel ;
c) poursuivre l'activité d'établissement au niveau du MSC selon le modèle d'établissement d'appels et l'information du profil d'abonné au réseau intelligent obtenue du VLR.

2. Procédé selon la revendication 1, qui comprend en outre l'étape consistant à fournir le modèle de terminaison d'appels dans le centre de commutation mobile, et à fournir en outre au moins une partie du modèle de terminaison d'appels dans le registre de localisation nominal, moyennant quoi la terminaison de communication vers un terminal mobile est partagée entre le registre de localisation nominal et le centre de commutation mobile.

3. Procédé selon la revendication 2, dans lequel un mappage est fourni entre un premier modèle de communication employé par le réseau mobile et un second modèle de communication employé par le réseau intelligent.

4. Procédé selon la revendication 2 ou 3, et comprenant un service d'itinérance filtrant les appels vers ou depuis les abonnés mobiles de façon à restreindre la plage des services disponibles à un dit abonné.

5. Centre de commutation mobile adapté pour être utilisé dans un réseau mobile et adapté pour établir une communication incorporant des services de réseau intelligent sur le réseau mobile, **caractérisé en ce que** ledit centre de commutation mobile possède un registre de localisation des visiteurs associé (VLR) comprenant des profils d'abonnés au réseau intelligent stockés, lesdits profils étant associés aux terminaux mobiles dans une zone de service du MSC à l'instant courant ; ledit MSC étant adapté pour poursuivre une activité d'établissement selon un modèle d'établissement d'appels et une information de profil d'abonné au réseau intelligent obtenue du VLR ; ledit MSC étant en outre adapté pour poursuivre une activité de terminaison selon un modèle de terminaison d'appels qui agit conjointement avec un registre de localisation nominal (HLR) dans le réseau mobile ; et dans lequel ledit centre de commutation mobile est adapté pour établir la communication sur un réseau intelligent fixe et le réseau mobile.

6. Centre de commutation mobile selon la revendication 5, dans lequel le registre de localisation des visiteurs et le centre de commutation mobile fournissent ensemble un point de services spéciaux pour des terminaux mobiles.

7. Centre de commutation mobile selon la revendication 5 ou 6, dans lequel ledit centre de commutation mobile comprend un centre de commutation mobile passerelle fournissant une interface entre le réseau intelligent et le réseau fixe.

8. Réseau.de communication comprenant un réseau mobile, ledit réseau mobile comprenant :
(i) un centre de commutation mobile (MSC) adapté de façon à permettre la connexion de terminaux mobiles au réseau mobile lors de l'utilisation ; et
(ii) un registre de localisation nominal (HLR) ; **caractérisé en ce que** le réseau de communication comprend en outre un réseau intelligent fixe et ledit réseau mobile comprend en outre :
(iii) un registre de localisation des visiteurs (VLR) associé au MSC et ayant des profils d'abonnés au réseau intelligent stockés qui sont associés aux terminaux mobiles dans une zone de service du MSC à l'instant courant; et
(iv) un modèle d'établissement d'appels et un modèle de terminaison d'appels ; ledit MSC étant adapté pour poursuivre une activité d'établissement selon le modèle d'établissement d'appels et une information de profil d'abonné au réseau intelligent obtenue du VLR et ledit MSC étant adapté pour poursuivre une activité de terminaison agissant conjointement avec ledit HLR.

9. Réseau de communication selon la revendication 8, dans lequel le HLR est adapté de façon à fournir un service d'itinérance filtrant les appels vers ou depuis les abonnés mobiles de façon à restreindre la plage des services disponibles à un dit abonné.
